(19) Europäisches Patentamt
European Patent Office
Office européen des brevets

(11) **EP 3 583 646 B1**

(12) **FASCICULE DE BREVET EUROPEEN**

(45) Date de publication et mention
de la délivrance du brevet:
**03.03.2021 Bulletin 2021/09**

(21) Numéro de dépôt: **18705695.7**

(22) Date de dépôt: **31.01.2018**

(51) Int Cl.:
*H01M 8/026* (2016.01)     *H01M 8/0223* (2016.01)
*H01M 8/1018* (2016.01)

(86) Numéro de dépôt international:
**PCT/FR2018/050218**

(87) Numéro de publication internationale:
**WO 2018/150117 (23.08.2018 Gazette 2018/34)**

(54) **PLAQUE DE PILE À COMBUSTIBLE, CELLULE ET PILE CORRESPONDANTES**

BRENNSTOFFZELLENPLATTE, ENTSPRECHENDE ZELLE UND STAPEL

FUEL CELL PLATE, CORRESPONDING CELL AND STACK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.02.2017 FR 1751257**

(43) Date de publication de la demande:
**25.12.2019 Bulletin 2019/52**

(73) Titulaire: **L'AIR LIQUIDE, Société Anonyme pour
l'Etude
et l'Exploitation des Procédés Georges Claude
75007 Paris (FR)**

(72) Inventeur: **ANDRE, Johan
38600 Fontaine (FR)**

(74) Mandataire: **Air Liquide
L'Air Liquide S.A.
Direction de la Propriété Intellectuelle
75, Quai d'Orsay
75321 Paris Cedex 07 (FR)**

(56) Documents cités:
**EP-A1- 2 372 824     WO-A2-00/41260**

- LI X ET AL: "Review of bipolar plates in PEM fuel cells: Flow-field designs", INTERNATIONAL JOURNAL OF HYDROGEN ENERGY, ELSEVIER SCIENCE PUBLISHERS B.V., BARKING, GB, vol. 30, no. 4, 1 mars 2005 (2005-03-01), pages 359-371, XP027750461, ISSN: 0360-3199 [extrait le 2005-03-01]
- OWEJAN J P ET AL: "Water management studies in PEM fuel cells, Part I: Fuel cell design and in situ water distributions", INTERNATIONAL JOURNAL OF HYDROGEN ENERGY, ELSEVIER SCIENCE PUBLISHERS B.V., BARKING, GB, vol. 34, no. 8, 1 mai 2009 (2009-05-01), pages 3436-3444, XP026050016, ISSN: 0360-3199, DOI: 10.1016/J.IJHYDENE.2008.12.100 [extrait le 2009-02-23] cité dans la demande
- SHIMPALEE S ET AL: "The impact of channel path length on PEMFC flow-field design", JOURNAL OF POWER SOURCES, ELSEVIER SA, CH, vol. 160, no. 1, 29 septembre 2006 (2006-09-29), pages 398-406, XP027938265, ISSN: 0378-7753 [extrait le 2006-09-29] cité dans la demande

EP 3 583 646 B1

**Description**

La présente invention concerne une plaque de pile à combustible ainsi qu'une cellule et une pile comprenant une telle plaque.

La présente invention concerne une plaque de pile à combustible, notamment pour pile à combustible de type à membrane échangeuse de protons (« PEM »), comprenant une face destinée à acheminer un gaz comburant ou un gaz carburant vers la surface active d'un Assemblage Membrane Electrodes, ladite face de la plaque comprenant des nervures en saillie délimitant un nombre déterminé de canaux prévus pour la circulation de gaz, les canaux ayant une longueur LCA déterminée et une largeur E déterminée, les nervures ayant une largeur LA déterminée.

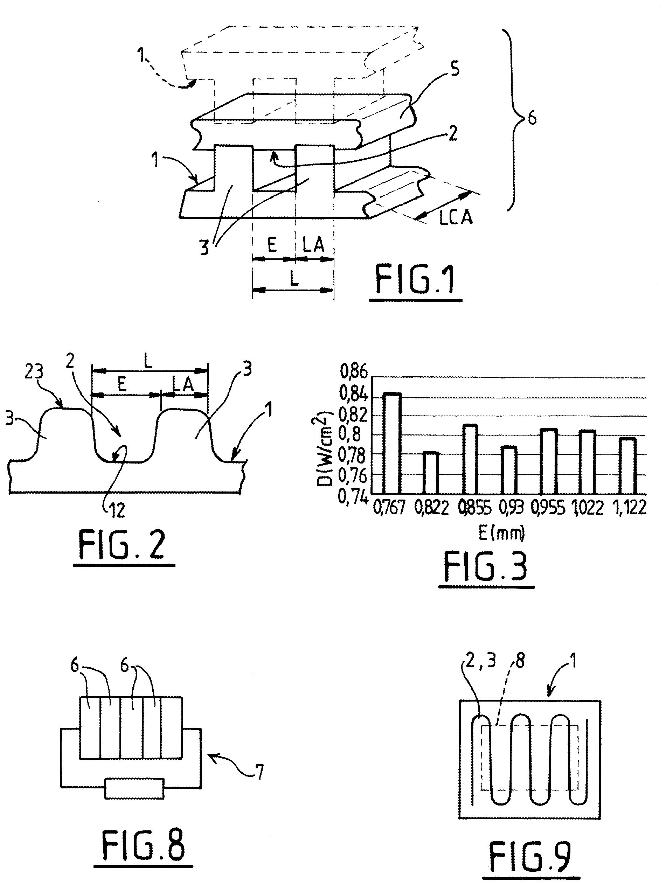

Les plaques de piles à combustible (mono-polaires ou bipolaires) sont prévues pour guider les réactifs (comburant contenant de l'oxygène et carburant contenant de l'hydrogène) jusqu'au siège des réactions électrochimiques des piles à combustible. Plus précisément, dans les piles de type à membranes échangeuses de protons (« PEMFC ») deux plaques de pile prennent en sandwich un Assemblage Membrane-Electrodes (« AME » en français ou «MEA» en anglais). L'AME est l'élément stratégique d'une cellule de pile car c'est le siège des réactions électrochimiques de la pile. La pile 7 à combustible comprend un empilement de telles cellules 6 (cf. figure 8).

A ce jour, le développement à grande échelle de la technologie des piles à combustible « PEMFC » est limité par les coûts élevés au regard de la puissance électrique délivrée. Une part importante de ce coût est attribuable à l'AME. Les deux plaques ont notamment pour fonctions d'amener les gaz réactifs à la plus grande partie possible de la surface active des AME (c'est-a-dire la surface où se trouvent les électrodes).

Pour ce faire, les faces réactives des plaques qui viennent au contact de l'AME comprennent à cet effet des canaux de guidage du gaz réactif (une plaque guide du comburant tandis que l'autre plaque guide du carburant). Les AME sont disposés sur les plaques de manière à ce que la surface couverte par le réseau de canaux corresponde à la surface active des AME. On peut alors définir deux types de situations possibles pour la surface active. L'AME peut ainsi être soit en face de l'ouverture 2 d'un canal, soit en face d'une nervure 3 qui délimite le canal 2 (en coupe perpendiculaire au plan de la plaque et perpendiculaire à la nervure et aux canaux, cette nervure a la forme générale d'une « dent » ou d'un créneau et pourra être désignée ainsi dans la suite).

La performance et la durée de vie des systèmes équipés de piles à combustible dépend largement de la qualité d'acheminement des réactifs et la gestion de l'eau produite par la réaction. La distribution des réactifs doit être aussi homogène que possible, l'AME doit maintenir un bon niveau d'hydratation, et simultanément, l'eau doit être évacuée autant que possible de la porosité des électrodes afin de justement permettre aux réactifs d'accéder aux sites réactionnels. Plus précisément, un compromis doit être fait entre l'assèchement du ionomère (conducteur protonique de la membrane, également présent dans les électrodes) en entrée de gaz, et le noyage des électrodes en sortie.

De nombreuses publications s'intéressent à la géométrie des plaques cf. par exemple le document EP2372824A1.

On peut définir un taux d'ouverture des plaques comme étant le pourcentage ou fraction « ouverte » et qui donc mesure la proportion de canaux par rapport à la totalité de surface active de la plaque. Ce taux (ou pourcentage) d'ouverture est défini par TO=100.(E/(E+LA)) avec E =la largeur des canaux, et LA la largeur de la nervure (cf. figure 1).

Une partie des publications de l'art antérieur concernant les plaques bipolaires indique que réduire la longueur des canaux et la largeur des nervures peut avoir un effet positif sur la performance des piles (PEMFC), mais les avis divergent sur la valeur optimale du taux d'ouverture des configurations.

Ces mesures sont bénéfiques mais ne suffisent pas pour atteindre des densités de puissance plus élevées au niveau de la cellule.

La maximisation du taux d'ouverture TO n'est pas non plus une fin en soi : une largeur de nervure excessive limite la performance par l'alimentation en gaz réactif, tandis qu'une largeur de canal excessive limite la performance par la conductivité électrique des couches de diffusion.

Un but de la présente invention est de pallier tout ou partie des inconvénients de l'art antérieur relevés ci-dessus.

A cette fin, la plaque de pile à combustible selon l'invention, par ailleurs conforme à la définition générique qu'en donne le préambule ci-dessus, est essentiellement caractérisée selon la revendication 1, en ce que le produit P de la longueur totale (LN) des nervures sur la plaque par unité de surface active par le taux d'ouverture (TO) de la plaque est compris entre 4,7 et 10, c'est-à-dire que $4,7 < P$ (cm$^{-1}$) = (LN x TO) < 10, le taux d'ouverture TO étant défini par TO=100.(E/ E+LA), la surface active de la plaque étant la surface de la plaque destinée à être en vis-à-vis de la surface active de Assemblage Membrane Electrodes.

Ainsi, comme décrit plus en détail ci-après, les inventeurs ont découvert qu'il était possible d'augmenter la performance des cellules en donnant une valeur déterminée au paramètre P constitué par le produit de la longueur totale des nervures par unité de surface active de la plaque avec le taux ou pourcentage d'ouverture.

Le paramètre P défini ci-dessus, exprimé en cm$^{-1}$, est compris entre 4,7 et 10 et de préférence compris entre 7 et 9 inclus. Ceci est obtenu corrélant de façon particulière le taux d'ouverture et la largeur/longueur des nervures des canaux).

Par ailleurs, des modes de réalisation de l'invention peuvent comporter l'une ou plusieurs des caractéristiques suivantes :

- selon un plan de coupe perpendiculaire au plan de la plaque et perpendiculaire à l'axe de circulation des canaux, les nervures forment des créneaux à angle droits,
- selon un plan de coupe perpendiculaire au plan de la plaque et perpendiculaire à l'axe de circulation des canaux, les sommets des nervures sont courbes et convexes,
- les jonctions des extrémités inférieures des nervures avec la surface de la plaque délimitant le fond des canaux forment des angles vifs et/ou des courbes progressives,
- en coupe selon un plan perpendiculaire au plan de la plaque et perpendiculaire à l'axe de circulation du canal délimité par les nervures considérées, la largeur des canaux est comprise entre 0,19 et 0,49 mm,
- les nervures ont une largeur comprise entre 0,5 et 0,92 mm,
- les canaux ont une longueur comprise entre 50 et 1000mm et de préférence compris entre 200 et 500mm,
- la plaque est constituée au moins en partie de matériau conducteur électrique tel qu'un matériau métallique ou d'alliage métallique embouti et/ou moulé et/ou usiné mécaniquement ou chimiquement et/ou gaufré notamment du graphite expansé,
- la plaque est constituée au moins en partie de matériau composite moulé et/ou usiné tel qu'un composite carbone/polymère,
- les nervures ont une section délimitée par une courbe de forme générale sinusoïdale selon un plan de coupe perpendiculaire au plan de la plaque et perpendiculaire à l'axe de circulation du canal délimité par les nervures considérées,
- les canaux sont disposés de façon parallèle sur la plaque,
- la longueur totale de toutes les nervures est égale au nombre de canaux sur la plaque plus un et multiplié par la longueur LCA du canal,
- la longueur totale de toutes les nervures LN par unité de surface étant égal à LN=(nombre de canaux +1)x(LCA) et rapporté à l'unité de surface active de la plaque unité de surface en $cm^2$)
- les canaux sont disposés de façon parallèle et ont une longueur identique constituée par le chemin parcouru par un canal (2) sur la plaque

L'invention concerne également une cellule de pile a combustible comprenant deux plaques prenant en sandwich un Assemblage Membrane Electrodes, les plaques étant conformes à l'une quelconque des caractéristiques ci-dessus ou ci-dessous.

L'invention concerne également une pile à combustible comprenant un tel empilement de cellules.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :

- la figure 1 représente une vue en perspective, schématique et partielle, d'un détail d'une coupe d'un Assemblage Membrane Electrodes pris en sandwich entre deux plaques de pile,
- la figure 2 représente en coupe, schématique et partielle, d'un détail d'une plaque de pile selon une seconde configuration,
- les figures 3 à 7 illustrent les densités de courant D (en W/cm2 en ordonnées) obtenues pour différents échantillons de plaques en fonction respectivement de différentes valeurs de paramètres géométriques des plaques (en abscisse),
- la figure 8 schématise une pile à combustible 7 comprenant un empilement de cellules 6 comprenant de telles plaques,
- la figure 9 schématise une vue de face de la face réactive d'une plaque de combustible illustrant la surface active de la plaque par rapport à la surface totale de la plaque.

Un paramètre permettant de mesurer l'efficacité des plaques de piles à combustible est la densité de puissance de la pile (en $W/cm^2$) à une tension déterminée, par exemple à une tension de 0,6V.

Le tableau 1 ci-dessous recense la densité de puissance obtenue à 0,6V pour différents échantillons de plaques ayant une longueur LCA de canal 2 (air), une largeur LA de nervure 3, une largeur E de canal 2, et un taux d'ouverture TO.

Dans tous les échantillons ci-dessous, les canaux 2 ont la même longueur de canal LCA (406mm). A noter que la longueur LCN de canal 2 est le chemin parcouru par le canal 2 sur la plaque (avec des méandres le cas échéant).

On définit la longueur totale LN des nervures par unité de surface active de la plaque (par exemple en $cm^2$) comme étant la longueur totale de toutes les nervures 3 (en contact avec l'AME) rapporté à l'unité de surface active (le $cm^2$) de la plaque.

Comme schématisé à la figure 9, les canaux 2 et nervures 3 peuvent s'étendre sur la majorité de la plaque 1. Cependant une fraction 8 seulement de cette surface est dite « active » c'est-à-dire destinée à être disposée en vis-à-vis de l'AME de la cellule. On désigne ainsi longueur totale LN des nervure par unité de surface active comme étant la longueur totale de toutes les nervures 3 destinées à être en contact avec l'AME rapporté à l'unité de surface active ($cm^2$) de la plaque.

Typiquement, pour une plaque 1 de pile la surface active est comprise généralement entre $5cm^2$ et $1200cm^2$ et représente environ 60 à 95% de sa surface totale.

A noter que, comme pour les canaux 2, cette longueur LN correspond à la longueur du « chemin » réalisé sur la plaque en formant le cas échant des méandres. Ainsi, lorsqu'une nervure 3 serpente sur la plaque, sa longueur est la distance totale (développée) parcourue sur la plaque dans la zone active par la nervure 3 (dans la zone qui échange avec la partie active de l'AME).

Dans le tableau 1 le nombre de canaux 2 en parallèle peut être différent d'un échantillon à l'autre. Cette différence du nombre de canaux 2 modifie donc proportionnellement la longueur LN totale des nervures disponibles par unité de surface active. En effet, pour le cas théorique d'une plaque avec un seul canal 2 de longueur LCA, la longueur totale des nervures LN par unité de surface active est deux fois la longueur LCA du canal 2 (il y a en effet deux nervures 3 pour délimiter un canal 2).

Pour le cas de plus de deux canaux sur la plaque, il y a (nombre de canaux+1) arêtes. En effet, sauf pour les arêtes périphériques, les arêtes 3 sont communes à deux canaux 2 adjacents.

La longueur totale de nervures LN par unité de surface active varie donc avec le nombre de canaux en parallèle sur la surface active.

Pour une surface active donnée, et un nombre de virages donné de canaux/nervures, la fixation de la largeur E des canaux et de la largeur LA des nervures détermine une longueur LN totale de nervures par unité de surface. De préférence les canaux 2 réalisent sur la plaque un nombre pair de virages pour équilibrer les longueurs et donc les pertes de charge entre canaux 2.

On peut définir la relation suivante : Longueur totale de toutes les nervures = (Nombre de canaux en parallèle + 1)x (LCA).

Longueur LN totale de nervures par unité de surface est cette longueur totale rapportée à (divisée par) la surface active S.

LN est exprimée cm.

La profondeur de canal a été ajustée sur chaque plaque testée afin d'obtenir la même perte de charge calculée, de sorte que les résultats soient significatifs. En effet, une perte de charge plus importante sur une configuration prise séparément se traduirait par une performance plus élevée. Les conditions expérimentales de comparaison du tableau 1 correspondent donc à des paramètres usuels identiques pour les AME (membrane de même type, température 65°C, Stœchiométrie air égale à 2.5, humidification autour de 50%,...).

**Tableau 1 :**

| N° Echantillon | Nombre de canaux en parallèle | Longueur LCA du canal air (mm) | largeur LA de nervure (mm) | Largeur E de canal (mm) | taux d'ouverture TO (%) | Paramètre P ($cm^{-1}$) | densité de puissance à 0,6V ($W/cm^2$) |
|---|---|---|---|---|---|---|---|
| 1 | 60 | 406 | 0,3 | 0,767 | 71,88% | 6,8 | 0,84 |
| 2 | 45 | 406 | 0,6 | 0,822 | 57,81% | 4,1 | 0,78 |
| 3 | 51 | 406 | 0,4 | 0,855 | 68,13% | 5,4 | 0,81 |
| 4 (référence) | 45 | 406 | 0,492 | 0,93 | 65,40% | 4,6 | 0,79 |
| 5 | 51 | 406 | 0,3 | 0,955 | 76,10% | 6,1 | 0,81 |
| 6 | 45 | 406 | 0,4 | 1,022 | 71,87% | 5,1 | 0,81 |
| 7 | 45 | 406 | 0,3 | 1,122 | 78,90% | 5,6 | 0,80 |

La figure 3 illustre la densité de courant D (en $W/cm^2$ en ordonnées) obtenue pour les échantillons du tableau 1 en fonction de la largeur E de canal (en mm en abscisses). Cette figure 3 indique que les canaux les plus fins représentent la configuration la plus favorable pour la densité de courant obtenue. Pour autant, aucune tendance claire ne peut être établie au vu de ces résultats.

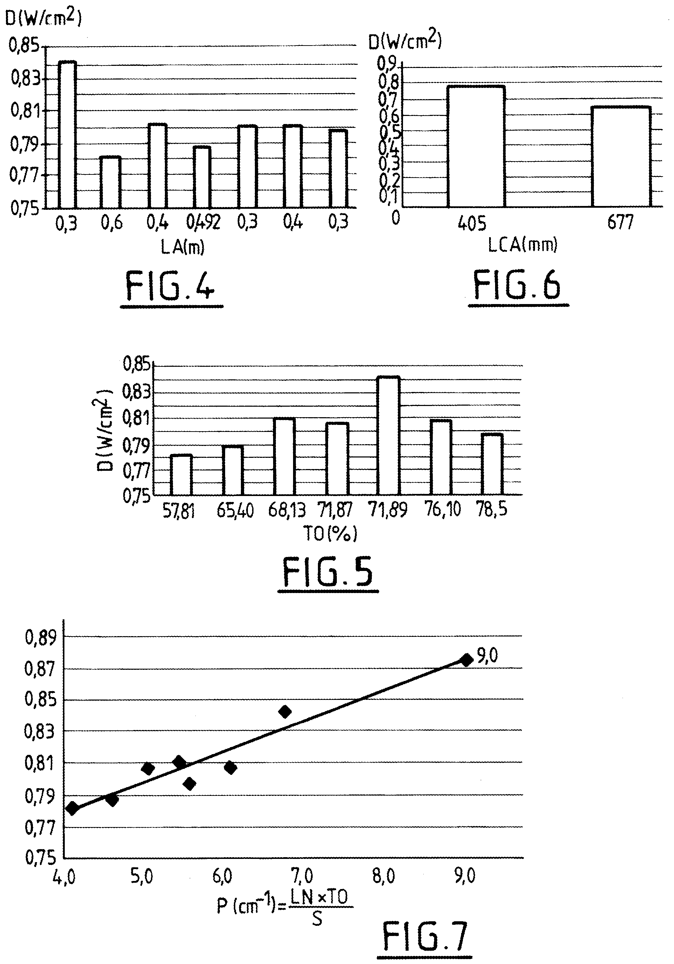

La figure 4 illustre la densité de courant D en $W/cm^2$ (en ordonnées) obtenue pour les échantillons du tableau 1 en fonction de la largeur LA des nervures en mm (en abscisse). Cette figure indique qu'une largeur de nervure minimale peut correspondre à la meilleure configuration de puissance obtenue (0,3mm), mais aussi à la moins bonne (0,6mm). La seule minimisation de la largeur de la nervure n'est donc pas forcément suffisante pour améliorer la performance de la cellule 6 et donc de la pile 7 comprenant un empilement de telles cellules 6. La réduction de la largeur LA trouve d'ailleurs comme limite la précision des procédés de fabrication (0,2 à 0,3mm selon la profondeur des canaux).

La figure 5 illustre la densité de courant D en $W/cm^2$ (en ordonnées) obtenue pour les échantillons du tableau 1 en fonction du taux d'ouverture TO en pourcentage (en abscisse.). Cette figure indique que la maximisation du taux d'ouverture TO n'améliore pas systématiquement la performance et des valeurs similaires peuvent là encore correspondre à des performances sensiblement différentes.

Dans la littérature (cf. X.-D. Wang, Y.-Y. Duan, W.-M. Yan, X.-F. Peng, Journal of Power Sources 175 (2008) 397-407 ou J.P. Owejan, J.J. Gagliardo, J.M. Sergi, S.G. Kandlikar, T.A. Trabold, International Journal of Hydrogen Energy 34 (2009) 3436-3444) les avis divergent sur une éventuelle valeur optimale de ce paramètre.

L'optimum peut probablement varier selon la nature des composants (Couche de diffusion de Gaz « GDL » plus ou moins épaisse), la résistance de contact entre matériau de plaque et de GDL, et le fait qu'il est délicat de modifier le taux d'ouverture toutes choses égales par ailleurs.

La figure 6 illustre la densité de courant D en $W/cm^2$ (en ordonnées) obtenue pour les échantillons du tableau 1 en fonction de la longueur de canal LCA en mm en abscisse. Cette figure indique que des canaux courts sont plus favorables car cela tend à réduire l'ampleur des zones plutôt asséchées en entrée de cellule et noyées en sortie. Ceci est confirmé dans la littérature sur le sujet par la publication de S. Shimpalee et al. Intitulée « The impact of channel path length on PEMFC flow-field design" Journal of Power Sources 160 (2006) 398-406).

La figure 7 illustre la densité de courant D en $W/cm^2$ (en ordonnées) obtenue pour les échantillons du tableau 1 en fonction, en abscisse, de P la longueur totale (en cm) de nervures LN par unité de surface (en cm2) et multipliée par le pourcentage ou taux d'ouverture TO :

$$\text{paramètre P } (cm^{-1}) \text{ en abscisse} = (LN \times TO)$$

$$= [(\text{Nombre de canaux en parallèle} +1) \times LCA/S] \times TO$$

S étant l'unité de surface active en $cm^2$.

Cette figure 7 illustre une corrélation plus franche que précédemment pour l'amélioration de la densité de puissance. A noter que cette tendance a été constatée « toutes choses égales par ailleurs », c'est-à-dire que la perte de charge est comparable pour toutes les configurations et échantillons étudiés, de même que la longueur de canal.

Les inventeurs ont ainsi mis en évidence qu'en adoptant un produit de la longueur totale LN des canaux 2 par unité de surface active par le taux d'ouverture (TO) de la plaque particulier, il est possible d'augmenter la densité de puissance d'environ 4 à 10 % par rapport aux plaques de l'art antérieur (les conditions étant égales par ailleurs).

Cette configuration semble améliorer le compromis entre le taux d'utilisation des plaques (proportion de surface des nervures en contact avec l'AME) et la puissance obtenue.

La figure 7 permet le cas échéant d'extrapoler la densité de puissance qui pourrait être atteinte si l'on parvient à fabriquer des plaques aux nervures encore plus fines (largeur encore réduites). Ainsi, pour une largeur de dent de 0,2mm (respectivement 0,3/0,492), avec 75 canaux en parallèle (respectivement 45/60), la longueur totale de nervures atteindrait 61m (respectivement 37m/49m), soit un paramètre P ($cm^{-1}$) (longueur de nervure multipliée par le pourcentage d'ouverture rapporté à la surface active) égal à 9,0 (respectivement 6,8/4,6), et donc une densité de puissance à 0,6V de 0,88$W/cm^2$, en progression de 4% par rapport à la meilleure configuration testée ici.

## Revendications

1. Plaque de pile à combustible, notamment pour pile à combustible de type à membrane échangeuse de protons (« PEM »), comprenant une face (1) destinée à acheminer un gaz comburant ou un gaz carburant vers la surface active d'un Assemblage Membrane Electrodes (5), ladite face (1) de la plaque comprenant des nervures (3) en saillie délimitant un nombre déterminé de canaux (2) prévus pour la circulation de gaz, les canaux (2) ayant une longueur (LCA) déterminée et une largueur (E) déterminée, les nervures (3) ayant une largeur (LA) déterminée, la plaque étant **caractérisée en ce que** le produit P de la longueur totale (LN) des nervures (3) sur la plaque par unité de surface active en $cm^2$ par le taux d'ouverture (TO) de la plaque est compris entre 4,7 et 10, c'est-à-dire que 4,7 < P en $cm^{-1}$ = (LN x TO) < 10, le taux d'ouverture TO étant défini par TO=100.(E/ E+LA), la surface active de la plaque étant la surface de la plaque destinée à être en vis-à-vis de la surface active de Assemblage Membrane Electrodes (5), la longueur totale des nervures étant égale au nombre de canaux sur la plaque plus un et multiplié par la longueur LCA du canal : longueur totale des nervures = (nombre de canaux + 1) x LCA; la longueur totale LN des nervures sur la plaque par unité de surface active est cette longueur totale rapportée à la surface active.

2. Plaque de pile à combustible selon la revendication 1, **caractérisée en ce que**, selon un plan de coupe perpendiculaire au plan de la plaque et perpendiculaire à l'axe de circulation des canaux (2), les nervures (3) forment des créneaux à angle droits.

3. Plaque de pile à combustible selon la revendication 1, **caractérisée en ce que**, selon un plan de coupe perpendiculaire au plan de la plaque et perpendiculaire à l'axe de circulation des canaux (2), les sommets des nervures (3) sont courbes et convexes.

4. Plaque de pile à combustible selon l'une quelconque des revendications 1 à 3, **caractérisée en ce que** les jonctions des extrémités inférieures des nervures (3) avec la surface de la plaque délimitant le fond (12) des canaux (2) forment des angles vifs et/ou des courbes progressives.

5. Plaque de pile à combustible selon l'une quelconque des revendications 1 à 4, **caractérisée en ce que**, en coupe selon un plan perpendiculaire au plan de la plaque et perpendiculaire à l'axe de circulation du canal (2) délimité par les nervures (3) considérées, la largeur (E) des canaux (2) est comprise entre 0,19 et 0,49 mm.

6. Plaque de pile à combustible selon l'une quelconque des revendications 1 à 5, **caractérisée en ce que** les nervures (3) ont une largeur (LA) comprise entre 0,5 et 0,92 mm.

7. Plaque de pile à combustible selon l'une quelconque des revendications 1 à 6, **caractérisée en ce que** les canaux (2) ont une longueur (LCA) comprise entre 50 et 1000mm et de préférence compris entre 200 et 500mm.

8. Plaque selon l'une quelconque des revendications 1 à 7, **caractérisée en ce que** la plaque est constituée au moins en partie de matériau conducteur électrique tel qu'un matériau métallique ou d'alliage métallique embouti et/ou moulé et/ou usiné mécaniquement ou chimiquement et/ou gaufré notamment du graphite expansé.

9. Plaque selon l'une quelconque des revendications 1 a 7, **caractérisée en ce que** la plaque est constituée au moins en partie de matériau composite moulé et/ou usiné tel qu'un composite carbone/polymère.

10. Cellule de pile a combustible comprenant deux plaques prenant en sandwich un Assemblage Membrane Electrodes (5), **caractérisée en ce que** les plaques sont conformes à l'une quelconque des revendications 1 à 9.

11. Pile à combustible comprenant un empilement de cellules conformes à la revendication 10.

**Patentansprüche**

1. Brennstoffzellenplatte, insbesondere für Brennstoffzelle des Typs mit Protonenaustauschmembran ("PEM"), umfassend eine Seite (1) zur Beförderung eines verbrennungsfördernden Gases oder eines Brenngases zur aktiven Fläche einer Elektrodenmembrananordnung (5), wobei die Seite (1) der Platte hervorstehende Rippen (3) umfasst, die eine bestimmte Anzahl von Kanälen (2) begrenzen, die für die Gaszirkulation vorgesehen sind, wobei die Kanäle (2) eine bestimmte Länge (LCA) und eine bestimmte Breite (E) aufweisen, wobei die Rippen (3) eine bestimmte Breite (LA) aufweisen, wobei die Platte **dadurch gekennzeichnet ist, dass** das Produkt P der Gesamtlänge (LN) der Rippen (3) auf der Platte pro Einheit aktiver Fläche in cm$^2$ mal die Öffnungsrate (TO) der Platte zwischen 4,7 und 10 liegt, das heißt, dass $4,7 < P$ in cm$^{-1}$ $= (LN \times TO) < 10$, wobei die Öffnungsrate TO durch $TO = 100.(E / E + LA)$ definiert ist, wobei die aktive Fläche der Platte die Fläche der Platte ist, die dazu bestimmt ist, sich gegenüber der aktiven Fläche der Elektrodenmembrananordnung (5) zu befinden, wobei die Gesamtlänge der Rippen gleich der Anzahl von Kanälen auf der Platte plus eins und mit der Länge LCA des Kanals multipliziert ist: Gesamtlänge der Rippen = (Anzahl von Kanälen + 1) x LCA; wobei die Gesamtlänge LN der Rippen auf der Platte pro Einheit aktiver Fläche diese Gesamtlänge ist, die mit der aktiven Fläche ins Verhältnis gesetzt ist.

2. Brennstoffzellenplatte nach Anspruch 1, **dadurch gekennzeichnet, dass** gemäß einer Schnittebene senkrecht zur Ebene der Platte und senkrecht zur Zirkulationsachse der Kanäle (2) die Rippen (3) rechtwinklige Zinnen bilden.

3. Brennstoffzellenplatte nach Anspruch 1, **dadurch gekennzeichnet, dass** gemäß einer Schnittebene senkrecht zur Ebene der Platte und senkrecht zur Zirkulationsachse der Kanäle (2) die Scheitel der Rippen (3) gebogen und konvex sind.

4. Brennstoffzellenplatte nach einem der Ansprüche 1 bis 3, **dadurch gekennzeichnet, dass** die Verbindungen der unteren Enden der Rippen (3) mit der Fläche der Platte, die den Boden (12) der Kanäle (2) begrenzt, scharfe Ecken und/oder progressive Kurven bilden.

5. Brennstoffzellenplatte nach einem der Ansprüche 1 bis 4, **dadurch gekennzeichnet, dass** die Breite (E) der Kanäle (2) im Schnitt gemäß einer Ebene senkrecht zur Ebene der Platte und senkrecht zur Zirkulationsachse des Kanals (2), der von den betrachteten Rippen (3) begrenzt ist, zwischen 0,19 und 0,49 mm beträgt.

6. Brennstoffzellenplatte nach einem der Ansprüche 1 bis 5, **dadurch gekennzeichnet, dass** die Rippen (3) eine Breite (LA) zwischen 0,5 und 0,92 mm aufweisen.

7. Brennstoffzellenplatte nach einem der Ansprüche 1 bis 6, **dadurch gekennzeichnet, dass** die Kanäle (2) eine Länge (LCA) zwischen 50 und 1000 mm und vorzugsweise zwischen 200 und 500 mm aufweisen.

8. Platte nach einem der Ansprüche 1 bis 7, **dadurch gekennzeichnet, dass** die Platte wenigstens teilweise von elektrisch leitendem Material, wie beispielsweise einem Material aus Metall oder einer Metalllegierung, das tiefgezogen und/oder geformt und/oder mechanisch oder chemisch bearbeitet und/oder gaufriert ist, insbesondere expandiertem Graphit gebildet ist.

9. Platte nach einem der Ansprüche 1 bis 7, **dadurch gekennzeichnet, dass** die Platte wenigstens teilweise von geformtem und/oder bearbeitetem Verbundmaterial, wie beispielsweise einem Kohlenstoff/Polymer-Verbundstoff gebildet ist.

10. Brennstoffzellen-Zelle umfassend zwei Platten, die eine Elektrodenmembrananordnung (5) sandwichartig einfassen, **dadurch gekennzeichnet, dass** die Platten einem der Ansprüche 1 bis 9 entsprechen.

11. Brennstoffzelle umfassend einen Stapel von Zellen nach Anspruch 10.

**Claims**

1. Fuel cell stack plate, notably for a proton exchange membrane ("PEM") fuel cell, comprising a face (1) intended to convey an oxidant gas or fuel gas toward the active surface of a Membrane Electrode Assembly (5), said face (1) of the plate comprising projecting ribs (3) delimiting a determined number of channels (2) intended for the circulation of gas, the channels (2) having a determined length (LCA) and a determined width (E), the ribs (3) having a determined width (LA), the plate being **characterized in that** the product P of the total length (LN) of the ribs (3) on the plate per unit active surface area in $cm^2$ times the degree of openness (TO) of the plate is comprised between 4.7 and 10, that is to say: $4.7 < P$ in $cm^{-1} = (LN \times TO) < 10$, the degree of openness TO being defined by $TO=100.(E/ E+LA)$, the active surface area of the plate being the surface of the plate intended to face the active surface of the Membrane Electrode Assembly (5), the total length of the ribs being equal to the number of channels on the plate plus one and multiplied by the channel length LCA: total length of ribs = (number of channels + 1) x LCA; the total length LN of the ribs on the plate per active surface area is this total length referenced to the active surface area.

2. Fuel cell stack plate according to Claim 1, **characterized in that** on a plane of section perpendicular to the plane of the plate perpendicular to the axis of circulation of the channels (2), the ribs (3) form right-angled crenellations.

3. Fuel cell stack plate according to Claim 1, **characterized in that** on a plane of section perpendicular to the plane of the plate perpendicular to the axis of circulation of the channels (2), the tops of the ribs (3) are curved and convex.

4. Fuel cell stack plate according to any of Claims 1 to 3, **characterized in that** the junctions between the lower ends of the ribs (3) and the surface of the plate which delimit the bottoms (12) of the channels (2) form sharp corners and/or progressive curves.

5. Fuel cell stack plate according to any of Claims 1 to 4, **characterized in that**, in section on a plane perpendicular to the plane of the plate perpendicular to the axis of circulation of the channel (2) delimited by the ribs (3) concerned, the width (E) of the channels (2) is comprised between 0.19 and 0.49 mm.

6. Fuel cell stack plate according to any one of Claims 1 to 5, **characterized in that** the ribs (3) have a width (LA) comprised between 0.5 and 0.92 mm.

7. Fuel cell stack plate according to any one of Claims 1 to 6, **characterized in that** the channels (2) have a length (LCA) comprised between 50 and 1000 mm, and preferably comprised between 200 and 500 mm.

8. Plate according to any one of Claims 1 to 7, **characterized in that** the plate is made at least in part of an electrically conducting material such as a metallic material or a metal alloy which has been pressed and/or molded and/or mechanically or chemically machined and/or embossed, notably of expanded graphite.

9. Plate according to any one of Claims 1 to 7, **characterized in that** the plate is made at least in part of a composite material that has been molded and/or machined, such as a carbon/polymer composite.

10. Cell of a fuel cell stack comprising two plates sandwiching a Membrane Electrode Assembly (5), **characterized in that** the plates are according to any one of Claims 1 to 9.

11. Fuel cell stack comprising a stack of cells according to Claim 10.

FIG.1

FIG.2

FIG.3

FIG.8

FIG.9

FIG.4

FIG.6

FIG.5

FIG.7

## RÉFÉRENCES CITÉES DANS LA DESCRIPTION

**Documents brevets cités dans la description**

- EP 2372824 A1

**Littérature non-brevet citée dans la description**

- **X.-D. WANG ; Y.-Y. DUAN ; W.-M. YAN ; X.-F. PENG.** *Journal of Power Sources,* 2008, vol. 175, 397-407
- **J.P. OWEJAN ; J.J. GAGLIARDO ; J.M. SERGI ; S.G. KANDLIKAR ; T.A. TRABOLD.** *International Journal of Hydrogen Energy,* 2009, vol. 34, 3436-3444
- **S. SHIMPALEE et al.** The impact of channel path length on PEMFC flow-field design. *Journal of Power Sources,* 2006, vol. 160, 398-406